# EUROPEAN PATENT SPECIFICATION

(11) **EP 4 121 358 B1**
(45) Date of publication and mention of the grant of the patent: **06.08.2025**
(21) Application number: 21717735.1
(22) Date of filing: 19.03.2021
(51) Int. Cl.: B65B 35/58, B65B 43/42, B65B 43/62, B65G 47/244

(54) **DEVICE FOR ROTATING ARTICLES OF A LOOSE ARTICLE GROUP, PACKAGING MACHINE WITH SUCH A DEVICE, AND METHOD FOR ROTATING ARTICLES OF A LOOSE ARTICLE GROUP WITH THE AID OF SUCH A DEVICE**
VORRICHTUNG ZUM DREHEN VON ARTIKELN EINER LOSEN ARTIKELGRUPPE, VERPACKUNGSMASCHINE MIT EINER SOLCHEN VORRICHTUNG UND VERFAHREN ZUM DREHEN VON ARTIKELN EINER LOSEN ARTIKELGRUPPE MITHILFE EINER SOLCHEN VORRICHTUNG
DISPOSITIF POUR FAIRE TOURNER DES ARTICLES D'UN GROUPE D'ARTICLES EN VRAC, MACHINE D'EMBALLAGE DOTÉE D'UN TEL DISPOSITIF ET PROCÉDÉ POUR FAIRE TOURNER DES ARTICLES D'UN GROUPE D'ARTICLES EN VRAC À L'AIDE D'UN TEL DISPOSITIF

(30) Priority: 19.03.2020 DE 102020107656
(43) Date of publication of application: 25.01.2023
(73) Proprietor: Illinois Tool Works Inc., Glenview, IL 60025 (US)
(72) Inventor: KORTE, Hartmut, Glenview, IL 60025 (US); WOHLE, Linus, Glenview, IL 60025 (US)
(74) Representative: Meissner Bolte Partnerschaft mbB
(86) International application number: PCT/US2021/023199
(87) International publication number: WO 2021/188924

(56) References cited:
- EP-A2- 1 486 439
- CN-A- 103 921 980
- US-A- 4 051 366
- US-A1- 2009 218 193

## Description

The invention relates generally to a device for rotating articles of a loose article group including at least two articles during a conveying movement on a conveyor, in particular a conveyor belt, a conveyor table, or the like, to a packaging machine for packaging loose article groups with such a device, and to a method for rotating articles of a loose article group including at least two articles during a conveying movement on a conveyor, in particular a conveyor belt, a conveyor table, or the like with the aid of such a device.

In the use of packaging machines for packaging articles or products arranged in article or product groups, it is basically known to use devices that make it possible to rotate or change the orientation of the entire article group before or after a packaging into bundles in order to then position them in boxes and/or combine them into batches.

Such a solution can be inferred, for example, from EP 2 368 801 A1, which relates to a packaging machine with a rotating device, which rotates individual article groups at time intervals in such a way that the article groups can be combined into a bundle in a subsequent packaging module.

The document US 4 051 366 A relates to a subassembly for optically sensing the orientation of a plurality of labeled containers spinning, on axes, at respective stations on an associated container handling assembly. The subassembly comprises a plurality of light sources disposed substantially in a first plane, there being fewer of said light sources than containers illuminated therebetween. The subassembly further comprises a plurality of optical sensors thus disposed in longitudinally extending tubular housings mounted with their axes parallel to the spin axes of the containers, one for each of the containers, each having an optically-sensitive aperture focused at a spot substantially in the path of the peripheral surface of a related rotating container and in a plane separated from said first plane by a distance which is sufficiently great so as to render said sensors substantially insensitive to specular reflection of light reflecting from containers illuminated by said light sources, yet sufficiently small so as to render said sensors substantially sensitive to diffuse reflection of light reflecting from labels on the containers illuminated by the light sources.

Often, however, there is also the need to orient or rotate individual articles or products of a loose article or product group relative to one another before the article group is packed into a bundle in a packaging module or packaging station of a packaging machine. This can be done for the sake of a simpler and quicker subsequent packaging of the article groups, but also for the sake of an improved visual appearance of the article group so that for example a tag or label affixed to the articles of the article group is more visible or in order to achieve a shape of the article group in the packaged state so that a subsequent processing or further transport can be carried out in a simpler, less time-consuming way.

Achieving such a rotation of individual articles or products of a loose article or product group, however, currently requires a high technical expense because the articles of the loose article group that are to be rotated must first be grasped or contacted by separately controlled grippers or guide elements and then each rotated individually. In this case, it can also be necessary to at least intermittently stop the conveying movement of the article group. This requires on the one hand, a very complex, expensive design of such a rotating device and of the larger packaging machine of which it is a part and on the other hand, interruptions in the production chain, which in turn reduces the output and increases production costs.

Based on these problems, therefore, the object of the present invention is to disclose a device, which permits the simplest possible turning of individual articles, in particular of two articles simultaneously, of a loose article group without having to separately drive or control the elements that are required for rotating the articles and without having to stop a conveyor that conveys the loose article group. Another object is to disclose a packaging machine for packaging loose article groups with at least one feeder station for feeding loose article groups, at least one conveyor, at least one such device, and at least one packaging station. Another object is to disclose a method for rotating articles of a loose article group including at least two articles during a conveying movement on a conveyor with the aid of such a device.

With regard to the device, the object underlying the present invention is attained by the subject of the independent claim 1; advantageous modifications of the device according to the invention are disclosed in the corresponding dependent claims 2 to 12. With regard to the packaging machine, the object underlying the present invention is attained by the subject of the additional independent claim 13. With regard to the method, the object underlying the present invention is attained by the subject of the other independent claim 14.

The invention thus relates in particular to a device for rotating articles of a loose article group including at least two articles during a conveying movement on a conveyor, in particular a conveyor belt, a conveyor table, or the like. The device has a rotating device, which is embodied to at least intermittently contact the articles of the loose article group during the conveying movement of the article group and during the contact, to simultaneously rotate each article of the at least two articles of the loose article group respectively around a corresponding first rotation axis extending orthogonal to the conveying direction between a respective first orientation and a respective second orientation relative to another article of the at least two articles of the article group.

By means of the solution according to the invention, it is possible for at least two articles of a loose article group, in particular two articles positioned one after the other in a conveying direction of the article group, to be simultaneously rotated relative to one another between two orientations during the conveying movement on a conveyor. It is thus possible to orient the at least two articles of the article group within the article group in such a way that one the one hand, an article group can be prepared for a subsequent packaging step and can be packaged and further processed in the simplest, least complicated way and on the other hand, the article group has a better visual appearance so that for example tags or labels affixed to the individual articles of the article group, which need to be visible, are correctly oriented.

According to an advantageous modification of the device according to the invention, the rotating device is embodied to rotate the at least two articles simultaneously in opposite rotation directions between their respective first and second orientations.

In particular, the first orientation of the articles differs by an angle of approximately 90° from the second orientation of the articles.

According to another advantageous modification of the device according to the invention, the rotating device is embodied to rotate around a second rotation axis extending orthogonal to the conveying direction of the loose article group and to the directions of the first rotation axes, wherein the rotating device has at least two pairs of opposing guide rods arranged spaced apart from each other for contacting the at least two articles, wherein during the contact, each of the articles of the at least two articles is received between a respective pair of guide rods, and wherein the at least two pairs of guide rods are able to rotate in opposite directions, in a respectively reversible fashion opposite from each other, between a first orientation and a second orientation.

By means of this it is possible, by means of a simple, stable, and continuous rotation of the rotating device around its rotation axis, to first produce a contact with the articles of the loose article group; then by means of the pairs of opposing guide rods that are spaced apart from each other, which receive a respective article between them and are able to rotate between two orientations relative to the rotating device, the rotation of the individual articles is carried out during the movement of the article group. After the rotation procedure of the individual articles is completed, the rotating device or more specifically the pairs of guide rods disengage(s) and lift(s) up from the articles again and can orient articles of a subsequent article group. It is thus possible to simultaneously rotate several articles of an article group during their conveying movement, in principle either by means of only one (initial) rotation of the rotating device or by means of two rotations around their respective rotation axes (vertical axes) that are carried out as a function of each other without having to separately control and drive any guide rods or gripper elements that are provided.

In particular, during a rotation of the at least two pairs of guide rods from the first orientation into the second orientation, the at least two articles of the loose article group are able to rotate relative to one another between their respective first and second orientations.

According to a (first) advantageous modification of the device according to the invention, the rotating device has a mechanism, which is embodied to convert a translatory motion - which is introduced into the mechanism, in particular transversely to the conveying direction of the article group, during the rotation of the rotating device around the second rotation axis - into a rotating motion of the at least two pairs of guide rods between their first orientations and second orientations.

The mechanism has at least two toothed pulleys or toothed gears that mesh with each other and two coupling rods, wherein a respective pair of the at least two pairs of guide rods is rotationally coupled to a respective one of the at least two toothed pulleys or toothed gears, and wherein a respective one of the at least two toothed pulleys or toothed gears is operatively connected to a respective one of the two coupling rods in such a way that the translatory motion - which is introduced into one of the two coupling rods as a function of the rotation of the rotating device around the second rotation axis - is converted by means of the at least two toothed pulleys or toothed gears into the respective rotating motion of the at least two pairs of guide rods.

In particular, the at least two toothed pulleys or toothed gears are embodied as eccentric toothed pulleys or eccentric toothed gears each having a respective eccentric pin, wherein the eccentric pins of the at least two eccentric toothed pulleys or eccentric toothed gears are supported in the rotating device in such a way that they are able to both rotate between two rod-shaped guide elements and move in translatory fashion along the conveying direction of the article group.

Through this embodiment of the mechanism, a translatory motion generated by the rotary motion of the rotating device can be converted into the corresponding rotating motions of the pairs of guide rods so that the articles of the article group that are intermittently in contact with the pairs of guide rods are simultaneously rotated in opposite directions from one another. In a particularly advantageous way, the use of the mechanism makes it possible by means of only one rotary motion of the rotating device to perform the orientation of the articles during the conveying movement of the article group so that it is also possible to do without a complicated control and structural embodiment of each pair of guide rods, which would require a large number of additional components. The rotating motion of the pairs of guide rods and the rotating motion of the articles that is performed by them is produced only a coupling of mechanical parts and thus by an overlapping of different sub-movements.

According to an advantageous modification of the device according to the invention, the device has a sliding block guide, wherein during the rotation of the rotating device around the second rotation axis, the two coupling rods are restrictively guided by means of the sliding block guide in such a way that the translatory motion is introduced into the mechanism.

In particular, the sliding block guide has two molded sliding blocks, wherein a first molded sliding block is embodied to introduce a first translatory motion into the first of two coupling rods during the rotation of the rotating device around the second rotation axis, wherein the mechanism converts the first translatory motion into a rotating motion of the at least two pairs of guide rods from their first orientations into their second orientations, and wherein a second molded sliding block is embodied to introduce a second translatory motion into the second coupling rod during the movement of the rotating device around the second rotation axis, wherein the mechanism converts the second translatory motion into a rotating motion of the at least two pairs of guide rods from their second orientations into their first orientations.

By means of a cooperation of the coupling rods with the corresponding molded sliding blocks, through the rotation of the rotating device, a translatory motion transverse to the conveying direction is introduced into the mechanism of the rotating device, which by means of the operative connection of the coupling rods to the toothed pulleys or toothed gears, is transformed or converted into a rotating motion of the toothed pulleys or toothed gears and thus results in a rotating motion of the pairs of guide rods between their two orientations. In this connection, the two toothed pulleys or toothed gears - whose pair of guide rods contacts two articles positioned one after the other when a contact with the article group is produced - always mesh with each other. The rotation angle of the pairs of guide rods is defined by the outer geometry of the molded sliding blocks along which the coupling rods slide during the rotation of the rotating device around the second rotation axis. In particular, each pair of guide rods travels by a rotation angle of approximately 90° between its first orientation and its second orientation. The articles then execute a corresponding rotation by approximately 90° during their conveying movement.

Through the use of two molded sliding blocks, which are in particular embodied on or affixed to opposite sides of the device, in particular of a framework housing of the device, it is also possible to produce the reversible movement of the coupling rods in a very uncomplicated way. First, a first coupling rod is guided along the first molded sliding block with the rotation of the rotating device and moves in translatory fashion transversely to the conveying direction toward the center of the device so that the pairs of guide rods that are in contact with the articles are rotated by the predetermined rotation angle by means of the toothed pulleys or toothed gears and thus orient the articles in the article group or rotate them between their first and second orientations. By means of the operative connection to one of the toothed pulleys or toothed gears, the second coupling rod correspondingly moves in translatory fashion away from the center transversely to the conveying direction. With a further rotation of the rotating device around the second axis, the pairs of guide rods first disengage from the articles and then the second coupling rod is guided by means of the second molded sliding block and moves in translatory fashion transversely to the conveying direction toward the center of the device. As a result of this, the pairs of guide rods are rotated back into their initial orientations, wherein the pairs of guide rods have no contact with any article group or articles. By means of the operative connection, the first coupling rod is correspondingly moved in translatory fashion transversely to the conveying direction away from the center of the device so that with further rotation of the rotating device around the second rotation axis, the rod can be moved again by means of the first molded sliding block and the articles of a subsequent article group can be rotated and oriented.

According to another (second) aspect of the invention, instead of the mechanism implemented by means of the sliding block guide, the device has a mechanism that is coupled to a drive unit and is embodied to transfer the at least two pairs of guide rods between their first orientation and second orientation during the rotation of the rotating device around the second rotation axis.

The mechanism that is coupled to a drive unit has at least two toothed pulleys or toothed gears that mesh with each other, wherein a respective pair of the at least two pairs of guide rods is rotationally coupled to a respective one of the at least two toothed pulleys or toothed gears, and wherein the at least two toothed pulleys or toothed gears are operatively connected to the drive unit in such a way that a rotating motion - which is introduced into the toothed pulleys or toothed gears by the drive unit as a function of the rotation of the rotating device around the second rotation axis - is converted by means of the at least two toothed pulleys or toothed gears into the respective rotating motion of the at least two pairs of guide rods.

According to an advantageous modification of the present invention, the drive unit is a motor drive, in particular an electric motor, or a pneumatic drive.

Through the use of a drive unit, which is coupled or operatively connected to the mechanism, a rotating motion that is intrinsically independent from the rotation of the rotating device is introduced into the mechanism of the rotating device, in particular into the meshed toothed pulleys or toothed gears of the mechanism, which results in a rotating motion of the pairs of guide rods between their two orientations. In this connection, the two toothed pulleys or toothed gears - whose pair of guide rods contacts two articles positioned one after the other when a contact with the article group is produced - always mesh with each other. The rotation angle of the pairs of guide rods can be defined in an uncomplicated way by means of the rotating motion that is introduced into the mechanism by the drive unit. In particular, each pair of guide rods travels by a rotation angle of approximately 90° between its first orientation and its second orientation. The articles then execute a corresponding rotation by approximately 90° during their conveying movement.

According to the invention, the device has a framework housing with two lateral struts that are connected to each other by means of a connecting strut.

The rotating device is preferably supported in the framework housing so that it is able to move, particularly in rotary fashion around the second rotation axis.

According to an advantageous modification of the device according to the invention, the device has an electromotive drive, which is embodied to move the rotating device in the framework housing, in particular to rotate it around the second rotation axis, and wherein the device has a control unit, which is embodied to control the electromotive drive in such a way that a rotation of the rotating device in the framework housing is synchronized with the conveying movement of the loose article group.

By means of this, the entire device can be operated in accordance with the above-mentioned aspects by means of only one electromotive drive and thus only one originally introduced rotary motion. The rotating speed of the rotating device in the framework housing can be controlled continuously and automatically by the control unit as a function of the conveying speed of the article group so that a fluid rotating motion of the articles during the conveying movement can always be achieved. In addition, the operating speed of the device can be flexibly adapted to the conveying speed without a technician having to first manually change the conveying speed and then manually change the operating speed of the device. The operating speed of the device thus automatically adapts to the conveying speed of the article groups, which is related for example to production capacities.

Alternatively to this, if a mechanism coupled to a drive unit is used, the device has an electromotive drive, which is embodied to move the rotating device in the framework housing, in particular to rotate it around the second rotation axis, wherein the device has a control unit, which is embodied to control both the electromotive drive and the drive unit in such a way that a rotation of the rotating device and a rotating motion of the at least two pairs of guide rods are synchronized with each other and with the conveying movement of the loose article group.

As a result of this, the rotating speed of the rotating device in the framework housing and the rotating speed of the articles that is introduced into the mechanism by the drive unit can be continuously and automatically controlled by the control unit as a function of each other and of the conveying speed of the article group so that a fluid rotating motion of the articles during the conveying movement can always be achieved. In addition, the operating speed of the device can be flexibly adapted to the conveying speed without a technician having to first manually change the conveying speed and then manually change the operating speed of the device. The operating speed of the device thus automatically adapts to the conveying speed of the article groups, which is related for example to production capacities.

According to another (third) aspect of the invention, a packaging machine for packaging loose article groups is provided, which has at least one feeder station for feeding loose article groups, at least one conveyor, in particular a conveyor belt, a conveyor table, or the like, for conveying the loose article groups, at least one device of the above-described type, and at least one packaging station.

According to another (fourth) aspect of the invention, a method is provided for rotating articles of a loose article group including at least two articles during a conveying movement on a conveyor, in particular a conveyor belt, a conveyor table, or the like, with the aid of a device of the above-described type.

An exemplary embodiment of the device according to the invention will be described below with reference to the accompanying drawings:
- Fig. 1: shows a schematic, isometric view of an embodiment of the device according to the invention;
- Fig. 2: shows a schematic top view of the exemplary embodiment of the device according to the invention shown in Fig. 1;
- Fig. 3: shows a schematic partial view of the exemplary embodiment of the device according to the invention shown in Fig. 1; and
- Fig. 4: shows a schematic, isometric view of another embodiment of the device according to the invention.

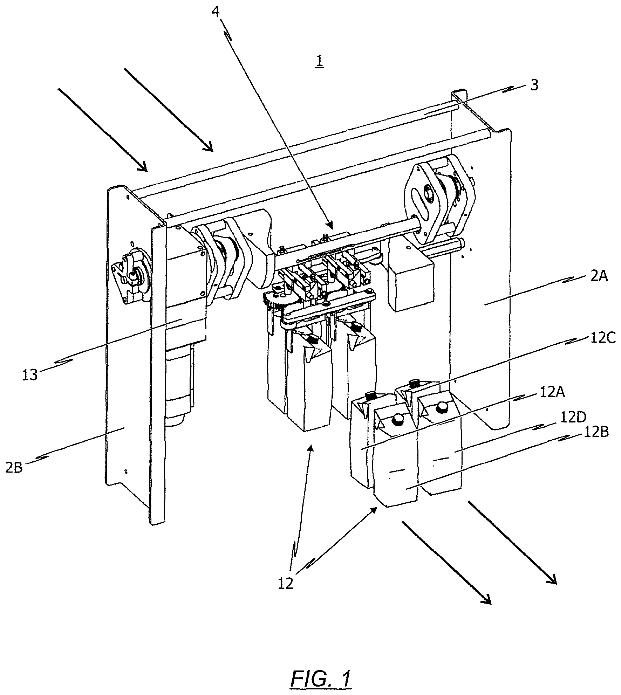

The device according to the invention for rotating articles of a loose article group will be described below with reference to the depictions in Fig. 1 to Fig. 4.

First of all, it should be noted that even though Figs. 1 to 4 show articles or products in the form of special containers for accommodating liquids, the device according to the invention is also intended to be used with articles or products that are provided for a different purpose and/or are of a different shape.

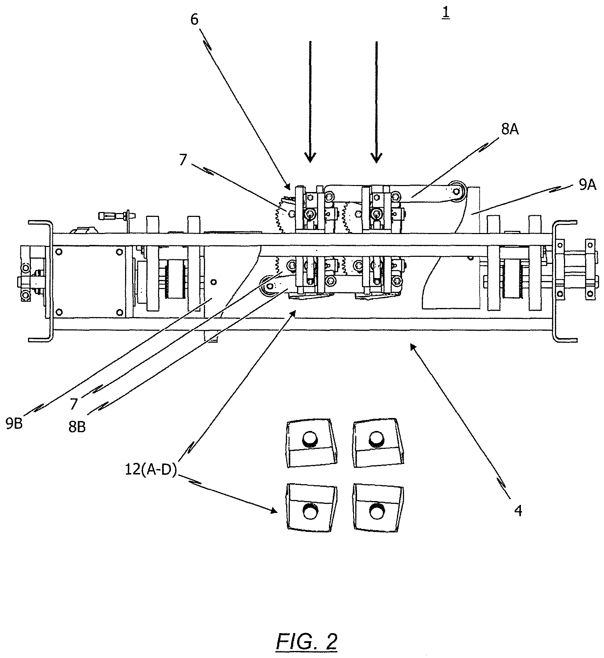

Figs. 1 to 4 show different views and embodiments of the device according to the invention. The device 1 for rotating articles 12A, 12B, 12C, 12D of a loose article group 12 including at least two articles 12A, 12B; 12C, 12D is embodied as a portal through which the loose article group(s) 12 can be conveyed by means of a conveyor such as a conveyor belt, a conveyor table, or some other conveyor. The articles 12A, 12B, 12C, 12D are fed to the conveyor in two tracks, wherein the articles 12A, 12B; 12C, 12D of one of these two tracks are always fed with the same orientation to one another. It is basically also possible for the articles 12A, 12B, 12C, 12D to be fed via only one feed track or for there to be more than two feed tracks situated next to one another so that smaller or larger loose article groups 12 can be assembled. The loose article groups 12 always include at least two articles (exactly two articles in Figs. 1 to 3) in the conveying direction (see the arrows in Figs. 1 and 2), which are positioned a short distance apart from one another on the conveyor and are moved in the conveying direction by means of the conveyor.

The device 1 has two lateral struts 2A, 2B connected to each other by means of a connecting strut 3 (or connecting rods), which form the portal-like structure of the device 1. A rotating device 4 (or turning device) is supported so that it is able to move inside this framework housing or this housing structure 2A, 2B, 3. By means of this rotating device 4, during a conveying movement of the article group 12, the two respective articles 12A, 12B; 12C, 12D positioned one after the other in a loose article group 12 can always be simultaneously moved or rotated relative to one another around a (first) rotation axis (vertical axis) extending orthogonal to the conveying direction of the article group 12. In particular, the rotating device 4 rotates the two articles 12A, 12B; 12C, 12D between a respective first orientation and a respective second orientation, wherein the rotating motion of the articles 12A, 12B; 12C, 12D occurs in opposite directions from each other.

Preferably, the at least two articles 12A, 12B; 12C, 12D positioned one after the other in the article group 12 are each simultaneously rotated by approximately 90° in opposite directions from each other during their transport on the conveyor.

The rotating device 4 is able to move or rotate in the device 1, particularly in the framework housing 2A, 2B, 3 of the device 1, around another (second) rotation axis extending orthogonal to the conveying direction and to the above-mentioned (first) rotation axes (vertical axes) of the articles. This rotation axis is in particular oriented transversely to the conveying direction of the article group 12. For this purpose, the rotating device 4 is supported in the lateral struts 2A, 2B of the device 1 by means of bearing journals so that the rotation axis coincides with a central axis of the bearing journals of the rotating device 4. The rotating device 4 does not change its orientation relative to the housing frame 2A, 2B, 3 of the device 1 during its rotation or rotating motion around the rotation axis, instead rotating as a unit around this rotation axis. The rotating device 4 revolves around the rotation axis on a fixed predetermined orbit so to speak.

During the rotation of the rotating device 4 around the rotation axis, the rotating device 4 at least intermittently comes into contact with the loose article group(s) that is/are conveyed by the conveyor in a stable and continuous fashion. During such a contacting procedure, the two articles 12A, 12B; 12C, 12D positioned one after the other in the article group 12 are simultaneously rotated by the rotating device 4 in opposite directions between their respective first orientation and their respective second orientation, wherein the first orientation of the articles 12A, 12B; 12C, 12D corresponds to a feed orientation and the second orientation of the articles 12A, 12B; 12C, 12D corresponds to a desired final orientation of the articles 12A, 12B; 12C, 12D in the article group 12. For contacting the articles 12A, 12B, 12C, 12D of the article group 12, the rotating device 4 has a pair of opposing guide rods (or guide elements or gripper elements) spaced apart from each other for each article, between which the respective article 12A, 12B, 12C, 12D of the article group 12 is received during a contacting procedure.

Two loose article groups 12 with four articles 12A, 12B, 12C, 12D each are shown in Figs. 1 and 2. For each of the above-mentioned articles 12A, 12B, 12C, 12D, the holding device 4 has a pair of opposing guide rods 5 spaced apart from each other with which the articles 12A, 12B, 12C, 12D are contacted and two articles 12A, 12B; 12C, 12D positioned one after the other are always rotated simultaneously in opposite rotation directions. As already mentioned previously, the article group 12 can also include several rows of articles arranged transversely to the conveying direction.

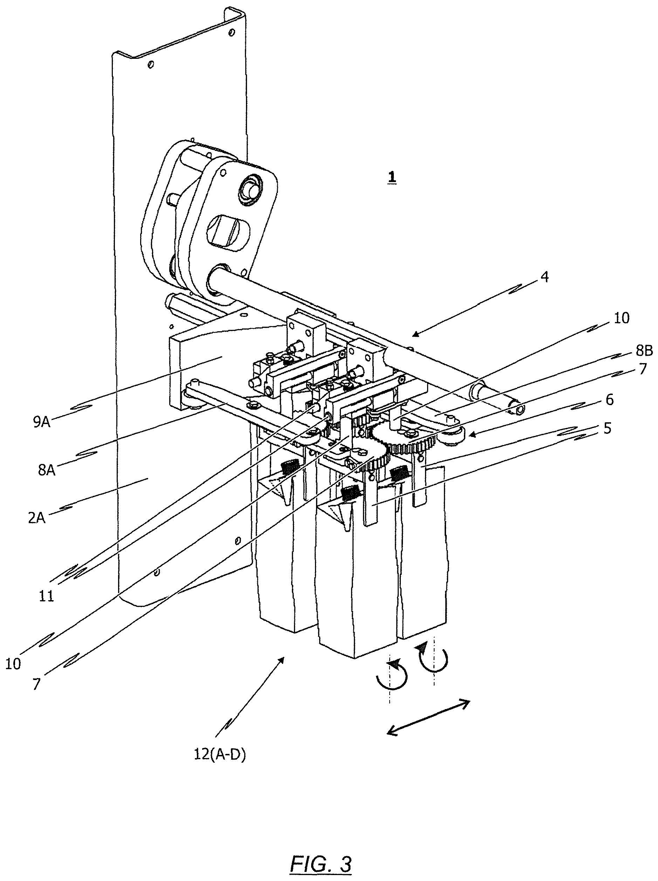

In order to achieve the rotation of the at least two articles 12A, 12B; 12C, 12D positioned one after the other in the conveying direction, the holding device 4 has a mechanism 6, which makes it possible to convert a translatory motion - which is introduced into the rotating device 4 during the rotation of the rotating device 4 executed around its rotation axis, particularly into the mechanism 6 and transversely to the conveying direction of the article group 12 - into rotary motions of the pairs of guide rods 5 in order to simultaneously rotate the articles 12A, 12B, 12C, 12D, which are contacted by the pairs of guide rods 5, in opposite directions from each other during the conveying movement (in particular see Figs. 2 and 3). In accordance with the rotation of the articles 12A, 12B, 12C, 12D between their first orientation and their second orientation, the pairs of guide rods 5 can be rotated between a first orientation and a second orientation by means of the mechanism 6. For each pair of guide rods 5, the mechanism 6 for the motion conversion has a toothed pulley or toothed gear 7, wherein the pairs of guide rods 5 are rotationally coupled to their respective toothed pulley or their respective toothed gear 7. Two toothed pulleys or toothed gears 7, which are associated with a respective pair of guide rods 5 and contact two articles 12A, 12B; 12C, 12D positioned one after the other, always mesh with each other and are each operatively connected to a respective coupling rod 8A, 8B (or coupling member or push rod) in such a way that the translatory motion transverse to the conveying direction - which is introduced into a respective one of the coupling rods 8A, 8B during the rotation of the rotating device 4 around the rotation axis - is converted into a rotating motion of the toothed pulleys or toothed gears 7 and thus into a rotating motion of the respective pairs of guide rods 5 between their first orientations and second orientations. For this purpose, the coupling rods 8A, 8B can each be connected to at least one toothed pulley or one toothed gear 7 (the number depends on the number of rows of articles in the article group 12 transverse to the conveying direction) via a frictionally and/or positively engaging connection such as a bolt connection.

To produce the translatory motion transverse to the conveying direction, the device 1 has a so-called sliding block guide, which has two molded sliding blocks 9A, 9B. Each of these molded sliding blocks 9A, 9B cooperates - as a function of the rotation of the rotating device 4 - with a respective one of the coupling rods 8A, 8B in such a way that this coupling rod 8A, 8B slides axially, transversely to the conveying direction toward the center of the device 1 and thus dictated by the operative connection to the toothed pulleys or toothed gears 7, induces a rotary motion of the toothed pulley or toothed gear 7. Because each toothed pulley or toothed gear 7 meshes with another toothed pulley or toothed gear 7, the rotary motion is transmitted to the other coupling rod 8B, 8A, which then moves in the opposite direction from the movement of the first coupling rod 8A, 8B transversely to the conveying direction, axially away from the center of the device 1. Through the connection of the coupling rods 8A, 8B to the toothed pulleys or toothed gears 7, wherein the coupling rods 8A, 8B respectively slide along an outer geometry of the molded sliding blocks 9A, 9B during the rotation of the rotating device 4 around the rotation axis, the pairs of guide rods 5 that are connected to the toothed pulleys or toothed gears 7 are simultaneously rotated in opposite directions from each other between their respective first orientation and their respective second orientation. As a result of this, in the case of a contact of the rotating device 4 with the articles 12A, 12B, 12C, 12D of the article group 12 (i.e. the rotating device 4 is intermittently placed onto the article group 12 during its rotation around its rotation axis), it is possible to correspondingly rotate the articles 12A, 12B; 12C, 12D positioned one after the other between their first orientation (feed orientation) and their second orientation (final orientation). Since the rotating device 4 rotates around the rotation axis in a stable and continuous fashion, the rotating device 4, in particular the pairs of guide rods 5, disengage(s) from the articles 12A, 12B, 12C, 12D of the article group 12 again after completing a rotation procedure and the second coupling rod then travels along the second molded sliding block 9B, which introduces a translatory motion - which is oriented opposite from the translatory motion described above and transversely to the conveying direction - into the mechanism 6 of the rotating device 4 and as a result, the pairs of guide rods 5 each rotate out of their second orientations and back into their first orientations. In this case, the rotating device 4 is not in contact with any article group 12. If the rotating device 4 rotates further around its rotation axis, then the rotating device 4 or the pairs of guide rods 5 come(s) back into contact with the articles 12A, 12B, 12C, 12D of a new loose article group 12 in order to then simultaneously rotate the at least two articles 12A, 12B; 12C, 12D positioned one after the other in this article group 12 in opposite directions from each other. This occurs by means of the rotating device 4 in accordance with the method described above.

So that the articles 12A, 12B; 12C, 12D positioned one after the other in the article group 12 can be rotated around their diagonal breadth, the toothed pulleys or toothed gears 7 that mesh with each other are preferably embodied in the form of so-called eccentric pulleys, which each have an eccentric pin 10. Each eccentric pin 10 of the meshing eccentric gears is positioned so that it is able to both rotate in the rotating device 4 around a/the vertical axis between two rod-shaped guide elements 11 (or guide rods or guide rails) and move in translatory fashion along the conveying direction. Through such a support and embodiment of the eccentric pin 10, it is possible during the rotating motion to increase the distance between the pairs of guide rods 5, which rotate the articles 12A, 12B; 12C, 12D positioned one after the other, so that it is possible to rotate the articles 12A, 12B; 12C, 12D around their diagonal breadth without the articles 12A, 12B; 12C, 12D blocking or contacting one another during their rotating motion.

As has already been mentioned, it is also possible for several articles of an article group 12, which are positioned one after the other and transversely to the conveying direction, to be simultaneously rotated by means of the rotating device 4. In such a case, several toothed pulleys or toothed gears 7 that mesh with one another are correspondingly arranged transversely to the conveying direction, which are each operatively connected to one of the coupling rods 8A, 8B in a corresponding fashion. By means of a respective single translatory motion transverse to the conveying direction, it is thus possible to simultaneously rotate several rows of articles of a loose article group 12 that are positioned transversely to the conveying direction.

The device 1 also has an electromotive drive 13, which can be affixed to the framework housing 2A, 2B, 3 of the device 1 or can also be provided separately. The electromotive drive 13 drives the rotating device 4 in such a way that the rotating device 4 is able to turn or rotate around its (second) rotation axis in the framework housing 2A, 2B, 3. The device 1 also has a control unit or control device, which is embodied to control the electromotive drive 13 in such a way that a rotation of the rotating device 4 is synchronized with the conveying movement of the loose article group 12 or is adapted to this conveying movement.

The entire device 1 can therefore be operated in accordance with the above-mentioned aspects by means of only one electromotive drive 13 and thus only one introduced (initial) rotary motion. The rotating speed of the rotating device 4 in the framework housing 2A, 2B, 3 can be continuously and automatically controlled by the control unit as a function of the conveying speed of the article group 12 so that a fluid rotating motion of the articles 12A, 12B, 12C, 12D during the conveying movement can always be achieved. In addition, the operating speed of the device 1 can be flexibly adapted to the conveying speed of the article group 12 without a technician having to first manually change the conveying speed and then also manually adapt the operating speed of the device 1. The operating speed of the device 1 thus automatically adapts to the conveying speed of the article groups 12, which is related for example to production capacities.

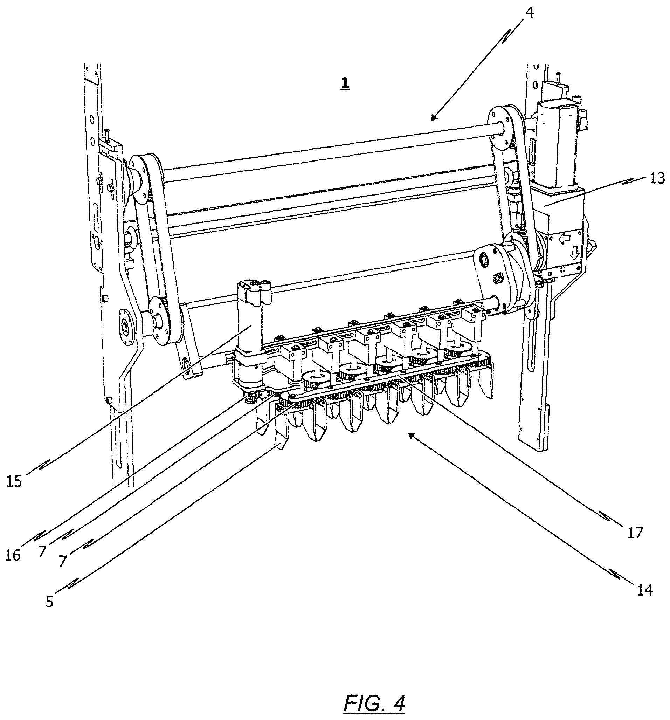

Fig. 4 shows another alternative embodiment of the device according to the invention 1. In order to achieve the rotation of at least two articles 12A, 12B; 12C, 12D positioned one after the other in the conveying direction, the rotating device 4 has a mechanism 14, which is coupled to the drive unit 15 and makes it possible to convert a rotating motion - which is introduced into the mechanism 14 by the drive unit 15 and which is produced in a way that is intrinsically independent of the conveying movement of the articles 12A, 12B; 12C, 12D and the rotation of the rotating device 4 around its rotation axis - into the rotary motions of the pairs of guide rods 5 in order to simultaneously rotate the articles 12A, 12B; 12C, 12D, which are contacted by guide rods 5, in opposite directions from each other during the conveying movement. In accordance with the rotation of the articles 12A, 12B, 12C, 12D between their first orientation and their second orientation, the pairs of guide rods 5 can be rotated between a first orientation and a second orientation by means of the mechanism 6. For each pair of guide rods 5, the mechanism 6 for the motion conversion has a toothed pulley or toothed gear 7 supported in rotary fashion by means of a pin, wherein the pairs of guide rods 5 are rotationally coupled to their respective toothed pulley or their respective toothed gear 7. Two toothed pulleys or toothed gears 7, which are associated with a respective pair of guide rods 5 and contact two articles 12A, 12B; 12C, 12D positioned one after the other, always mesh with each other. One of these toothed pulleys or toothed gears 7 is coupled or operatively connected to the drive unit 15, for example by means of a toothed pulley or toothed gear 16 affixed to a shaft of the drive unit 15 (other embodiments are also conceivable, though), in such a way that the rotating motion - which is introduced into this toothed pulley or toothed gear 7 of the mechanism 14 by means of the drive unit 15 - is converted into a rotating motion of the respective pairs of guide rods 5 between their first orientations and second orientations. Because the toothed pulley or toothed gear 7 of the mechanism 14 that is driven by the drive unit 15 meshes with the other toothed pulley or toothed gear 7 of the mechanism 14, the movement is transmitted to both pairs of guide rods 5. If several rows of articles extending transversely to the conveying direction of the article group 12 are provided, then the rotating motion introduced into the toothed pulley or toothed gear 7 by the drive unit 15 can be transmitted to the meshed toothed pulleys or toothed gears 7, which are provided for the other rows of articles. As shown in Fig. 4, this can be carried out by means of a coupling rod 17, which connects one toothed pulley or toothed gear 7 of each of the pairs of toothed pulleys or toothed gears 7 of the rows of articles to each other transversely to the conveying direction.

The drive unit 15 can be a motor drive, in particular an electric motor such as a servomotor, or a pneumatic drive or hydraulic drive. It is affixed to the rotating device 4 of the device 1 so that it moves along with it in accordance with the movement of the rotating device 4.

In addition, this alternative embodiment of the device 1 likewise has an electromotive drive 13, which can be affixed to the framework housing 2A, 2B, 3 of the device 1 or can also be provided separately. The electromotive drive 13 drives the rotating device 4 in such a way that the rotating device 4 is able to turn or rotate around its (second) rotation axis in the framework housing 2A, 2B, 3. The device 1 also has a control unit or control device, which is embodied to control both the drive unit 15 and the electromotive drive 13 in such a way that a rotating motion of the at least two pairs of guide rods 5, i.e. a rotating motion of the article group 12, and a rotation of the rotating device 4 are synchronized with each other and also with the conveying movement of the loose article group 12 or are adapted to this conveying movement.

It should be noted that all structural embodiments of the device 1 that are described in relation to Figs. 1 to 3, particularly with regard to the framework housing of the device 1, the rotating device 4, and the mechanism, can be transferred to this alternative embodiment provided that they do not conflict with it.

The above-described embodiments of the device 1 for rotating articles of a loose article group can be used with known packaging machines and can be provided, for example, as a module or station of such a packaging machine. The invention thus also includes a packaging machine with at least at least [sic] one feeder station (or feeder module) for feeding loose article groups, at least one conveyor, in particular a conveyor belt, a conveyor table, or the like, for conveying the loose article groups, at least one device of the above-described type, and at least one packaging station (or a packaging module).

The invention also relates to a method for rotating articles of a loose article group including at least two articles during a conveying movement on a conveyor, in particular a conveyor belt, a conveyor table, or the like with the aid of a device of the above-described type. The method is carried out as described above.

In summary, therefore, the disclosure is of a device by means of which uniformly oriented articles or products of an article or product group that are fed in two or more tracks by means of a continuously revolving rotating motion have one rotating device placed onto to them for each feed track or the rotating device contacts the articles or products and attaches itself to the products, particularly in a positively engaging way. According to one embodiment of the device, with a continuation of the rotating motion, by means of a restrictive guidance that is produced by means of a sliding block guide, the rotating device is induced to execute an opposite rotating motion by 90° around a rotation axis (vertical axis) of the product pairs that are to be rotated, which axis is oriented orthogonal to the conveying direction and to a direction extending transversely to the conveying direction. Eccentrically embodied toothed pulleys simultaneously result in the fact that a distance between the articles or products that are to be rotated grows during the rotating motion and as a result, it is also possible to achieve a rotation around the diagonal breadth of the articles or products. With a further continuation of the rotating motion of the rotating device, the rotating device lifts up from the articles or products and disengages from them again. During the further rotation, the pairs of guide rods, which are provided for contacting the articles or products, are then rotated back into their first orientation, i.e. into their initial position, by means of a restrictive guidance working in the opposite direction, which is likewise achieved by means of the sliding block guide, in particular a second molded sliding block. According to another alternative embodiment, with a continuation of the rotating motion by means of the drive unit, the rotating device is induced to execute an opposite rotating motion by 90° around a rotation axis (vertical axis) of the product pairs that are to be rotated, which axis is oriented orthogonal to the conveying direction and to a direction oriented transversely to the conveying direction.

The invention is not limited to the exemplary embodiment of device according to the invention, but is instead apparent from a consideration of all of the features disclosed herein.

## Claims

1. A device (1) for rotating articles (12A, 12B, 12C, 12D) of a loose article group (12) including at least two articles (12A, 12B; 12C, 12D) during a conveying movement on a conveyor, in particular a conveyor belt, a conveyor table, or the like, wherein the device (1) has a rotating device (4), which is embodied to at least intermittently contact the articles (12A, 12B, 12C, 12D) of the loose article group (12) during the conveying movement of the article group (12) and during the contact, to simultaneously rotate each article (12A, 12B, 12C, 12D) of the at least two articles (12A, 12B, 12C, 12D) of the loose article group (12) respectively around a corresponding first rotation axis extending orthogonal to the conveying direction between a respective first orientation and a respective second orientation relative to another article (12A, 12B, 12C, 12D) of the at least two articles (12A, 12B, 12C, 12D) of the loose article group (12),
**characterized in that**
the rotating device (4) is embodied to rotate around a second rotation axis extending orthogonal to the conveying direction of the loose article group (12) and to the directions of the first rotation axes, wherein the rotating device (4) has at least two pairs of opposing guide rods (5) arranged spaced apart from each other for contacting the at least two articles (12A, 12B, 12C, 12D), wherein during the contact, each of the articles (12A, 12B, 12C, 12D) of the at least two articles (12A, 12B, 12C, 12D) is received between a respective pair of guide rods (5), and wherein the at least two pairs of guide rods (5) are able to rotate in opposite directions, in a respectively reversible fashion opposite from each other, between a first orientation and a second orientation.

2. The device (1) according to claim 1,
wherein the rotating device (4) is embodied to rotate the at least two articles (12A, 12B; 12C, 12D) simultaneously in opposite rotation directions between their respective first and second orientations, and/or
wherein the first orientation of the articles differs by an angle of approximately 90° from the second orientation of the articles.

3. The device (1) according to claim 1 or 2,
wherein during a rotation of the at least two pairs of guide rods (5) from the first orientation into the second orientation, the at least two articles (12A, 12B; 12C, 12D) of the loose article group (12) are able to rotate relative to one another between their respective first and second orientations.

4. The device (1) according to one of claims 1 to 3,
wherein the rotating device (4) has a mechanism (6), which is embodied to convert a translatory motion - which is introduced into the mechanism (6), in particular transversely to the conveying direction of the article group (12), during the rotation of the rotating device (4) around the second rotation axis - into a rotating motion of the at least two pairs of guide rods (5) between their first orientations and second orientations.

5. The device (1) according to claim 4,
wherein the mechanism (6) has at least two toothed pulleys or toothed gears (7) that mesh with each other and two coupling rods (8A, 8B), wherein a respective pair of the at least two pairs of guide rods (5) is rotationally coupled to a respective one of the at least two toothed pulleys or toothed gears (7), and wherein a respective one of the at least two toothed pulleys or toothed gears (7) is operatively connected to a respective one of the two coupling rods (8A, 8B) in such a way that the translatory motion - which is introduced into one of the two coupling rods (8A, 8B) as a function of the rotation of the rotating device (4) around the second rotation axis - is converted by means of the at least two toothed pulleys or toothed gears (7) into the respective rotating motion of the at least two pairs of guide rods (5), and
wherein, preferably, the at least two toothed pulleys or toothed gears (7) are embodied as eccentric toothed pulleys or eccentric toothed gears each having a respective eccentric pin (10), and
wherein the eccentric pins (10) of the at least two eccentric toothed pulleys or eccentric toothed gears are supported in the rotating device (4) in such a way that they are able to both rotate between two rod-shaped guide elements (11) and move in translatory fashion along the conveying direction of the article group (12).

6. The device (1) according to claim 5,
wherein the device (1) has a sliding block guide, wherein during the rotation of the rotating device (4) around the second rotation axis, the two coupling rods (8A, 8B) are restrictively guided by means of the sliding block guide in such a way that the translatory motion is introduced into the mechanism (6).

7. The device (1) according to claim 6,
wherein the sliding block guide has two molded sliding blocks (9A, 9B), wherein a first molded sliding block (9A) is embodied to introduce a first translatory motion into the first (8A) of two coupling rods (8A, 8B) during the rotation of the rotating device (4) around the second rotation axis, wherein the mechanism (6) converts the first translatory motion into a rotating motion of the at least two pairs of guide rods (5) from their first orientations into their second orientations, and wherein a second molded sliding block (9B) is embodied to introduce a second translatory motion into the second coupling rod (8B) during the movement of the rotating device (4) around the second rotation axis,
wherein the mechanism (6) converts the second translatory motion into a rotating motion of the at least two pairs of guide rods (5) from their second orientations into their first orientations.

8. The device (1) according to claim 1,
wherein the rotating device (4) has a mechanism (14) that is coupled to a drive unit (15) and is embodied to transfer the at least two pairs of guide rods (5) between their first orientation and second orientation during the rotation of the rotating device (4) around the second rotation axis.

9. The device (1) according to claim 8,
wherein the mechanism (14) has at least two toothed pulleys or toothed gears (7) that mesh with each other, wherein a respective pair of the at least two pairs of guide rods (5) is rotationally coupled to a respective one of the at least two toothed pulleys or toothed gears (7), and wherein the at least two toothed pulleys or toothed gears (7) are operatively connected to the drive unit (15) in such a way that a rotating motion - which is introduced into the toothed pulleys or toothed gears (7) by the drive unit (15) as a function of the rotation of the rotating device (4) around the second rotation axis - is converted by means of the at least two toothed pulleys or toothed gears (7) into the respective rotating motion of the at least two pairs of guide rods (5), and
wherein, preferably, the drive unit (15) is a motor drive, in particular an electric motor, or a pneumatic drive.

10. The device (1) according to one of claims 1 to 9,
wherein the device (1) has a framework housing with two lateral struts (2A, 2B) that are connected to each other by means of a connecting strut (3).

11. The device (1) according to claim 10,
wherein the rotating device (4) is supported in the framework housing so that it is able to move, particularly in rotary fashion around the second rotation axis.

12. The device (1) according to claim 11,
wherein the device (1) has an electromotive drive (13), which is embodied to move the rotating device (4) in the framework housing, in particular to rotate it around the second rotation axis, and
wherein the device (1) has a control unit, which is embodied to control the electromotive drive (13) in such a way that a rotation of the rotating device (4) in the framework housing is synchronized with the conveying movement of the loose article group (12); or
wherein the device (1) has an electromotive drive (13), which is embodied to move the rotating device (4) in the framework housing, in particular to rotate it around the second rotation axis, and
wherein the device (1) has a control unit, which is embodied to control both the electromotive drive (13) and the drive unit (15) in such a way that a rotation of the rotating device (4) and a rotating motion of the at least two pairs of guide rods (5) are synchronized with each other and with the conveying movement of the loose article group (12).

13. A packaging machine for packaging loose article groups (12),
wherein the packaging machine comprises:
- at least one feeder station for feeding loose article groups;
- at least one conveyor, in particular a conveyor belt, a conveyor table, or the like, for conveying the loose article groups;
- at least one device (1) according to one of claims 1 to 12; and
- at least one packaging station.

14. A method for rotating articles (12A, 12B, 12C, 12D) of a loose article group (12) including at least two articles (12A, 12B; 12C, 12D) during a conveying movement on a conveyor, in particular a conveyor belt, a conveyor table, or the like, with the aid of a device (1) according to one of claims 1 to 12.

## Patentansprüche

1. Vorrichtung (1) zum Drehen von Artikeln (12A, 12B, 12C, 12D) einer losen Artikelgruppe (12), die mindestens zwei Artikel (12A, 12B; 12C, 12D) während einer Förderbewegung auf einem Förderer, insbesondere einem Förderband, einem Fördertisch oder dergleichen, beinhaltet, wobei die Vorrichtung (1) eine Drehvorrichtung (4) aufweist, die so ausgebildet ist, dass sie die Artikel (12A, 12B, 12C, 12D) der losen Artikelgruppe (12) während der Förderbewegung der Artikelgruppe (12) berührt und dass sie, während des Kontakts, gleichzeitig jeden Artikel (12A, 12B, 12C, 12D) der mindestens zwei Artikel (12A, 12B, 12C, 12D) der losen Artikelgruppe (12) jeweils um eine entsprechende erste Drehachse, die sich orthogonal zu der Förderrichtung zwischen einer entsprechenden ersten Ausrichtung und einer entsprechenden zweiten Ausrichtung relativ zu einem anderen Artikel (12A, 12B, 12C, 12D) der mindestens zwei Artikel (12A, 12B, 12C, 12D) der losen Artikelgruppe (12), dreht,
**dadurch gekennzeichnet, dass**
die Drehvorrichtung (4) ausgebildet ist, um sich um eine zweite Drehachse zu drehen, die sich orthogonal zu der Förderrichtung der losen Artikelgruppe (12) und zu den Richtungen der ersten Drehachsen erstreckt, wobei die Drehvorrichtung (4) mindestens zwei Paare von gegenüberliegenden Führungsstangen (5) aufweist, die voneinander beabstandet angeordnet sind, um die mindestens zwei Artikel (12A, 12B, 12C, 12D) zu berühren, wobei, während des Kontakts, jeder der Artikel (12A, 12B, 12C, 12D) der mindestens zwei Artikel (12A, 12B, 12C, 12D) zwischen einem jeweiligen Paar von Führungsstangen (5) aufgenommen ist, und wobei die mindestens zwei Paare von Führungsstangen (5) sich in entgegengesetzte Richtungen, in einer jeweils reversiblen Weise entgegengesetzt zueinander zwischen einer ersten Ausrichtung und einer zweiten Ausrichtung, drehen können.

2. Vorrichtung (1) nach Anspruch 1,
wobei die Drehvorrichtung (4) ausgebildet ist, um die mindestens zwei Artikel (12A, 12B; 12C, 12D) gleichzeitig in entgegengesetzten Drehrichtungen zwischen ihren jeweiligen ersten und zweiten Ausrichtungen zu drehen, und/oder wobei sich die erste Ausrichtung der Artikel um einen Winkel von ungefähr 90° von der zweiten Ausrichtung der Artikel unterscheidet.

3. Vorrichtung (1) nach Anspruch 1 oder 2,
wobei während einer Drehung der mindestens zwei Paare von Führungsstangen (5) von der ersten Ausrichtung in die zweite Ausrichtung die mindestens zwei Artikel (12A, 12B; 12C, 12D) der losen Artikelgruppe (12) in der Lage sind, sich relativ zueinander zwischen ihren jeweiligen ersten und zweiten Ausrichtungen zu drehen.

4. Vorrichtung (1) nach einem der Ansprüche 1 bis 3,
wobei die Drehvorrichtung (4) einen Mechanismus (6) aufweist, der ausgebildet ist, um eine translatorische Bewegung, insbesondere quer zu der Förderrichtung der Artikelgruppe (12), die während der Drehung der Drehvorrichtung (4) um die zweite Drehachse in den Mechanismus (6) eingeleitet wird, in eine Drehbewegung der mindestens zwei Paare von Führungsstangen (5) zwischen ihren ersten Ausrichtungen und zweiten Ausrichtungen umzuwandeln.

5. Vorrichtung (1) nach Anspruch 4,
wobei der Mechanismus (6) mindestens zwei miteinander in Eingriff stehende Zahnscheiben oder Zahnräder (7) und zwei Koppelstangen (8A, 8B) aufweist, wobei ein entsprechendes Paar der mindestens zwei Paare von Führungsstangen (5) mit jeweils einem der mindestens zwei Zahnscheiben oder Zahnräder (7) drehgekoppelt ist, und wobei jeweils eine der mindestens zwei Zahnscheiben oder Zahnräder (7) mit jeweils einer der beiden Koppelstangen (8A, 8B) derart in Wirkverbindung steht, dass die translatorische Bewegung, die in Abhängigkeit von der Drehung der Drehvorrichtung (4) um die zweite Drehachse in eine der beiden Koppelstangen (8A, 8B) eingeleitet wird, mittels der mindestens zwei Zahnscheiben oder Zahnräder (7) in die jeweilige Drehbewegung der mindestens zwei Paare von Führungsstangen (5) umgewandelt wird, und
wobei vorzugsweise die mindestens zwei Zahnscheiben oder Zahnräder (7) als exzentrische Zahnscheiben oder als exzentrische Zahnräder mit jeweils einem jeweiligen exzentrischen Zapfen (10) ausgebildet sind, und
wobei die exzentrischen Zapfen (10) der mindestens zwei exzentrischen Zahnscheiben oder der exzentrischen Zahnräder in der Drehvorrichtung (4) so gelagert sind, dass sie sich sowohl zwischen zwei stangenförmigen Führungselementen (11) drehen als auch translatorisch entlang der Förderrichtung der Artikelgruppe (12) bewegen können.

6. Vorrichtung (1) nach Anspruch 5,
wobei die Vorrichtung (1) eine Gleitschuhführung aufweist, wobei während der Drehung der Drehvorrichtung (4) um die zweite Drehachse die beiden Koppelstangen (8A, 8B) mittels der Gleitschuhführung derart zwangsgeführt werden, dass die translatorische Bewegung im Mechanismus (6) eingeleitet wird.

7. Vorrichtung (1) nach Anspruch 6,
wobei die Gleitschuhführung zwei geformte Gleitschuhblöcke (9A, 9B) aufweist, wobei ein erster geformter Gleitschuhblock (9A) so ausgebildet ist, dass er eine erste translatorische Bewegung in die erste (8A) von zwei Koppelstangen (8A, 8B) während der Drehung der Drehvorrichtung (4) um die zweite Drehachse einleitet, wobei der Mechanismus (6) die erste translatorische Bewegung in eine Drehbewegung der mindestens zwei Paare von Führungsstangen (5) von ihren ersten Ausrichtungen in ihre zweiten Ausrichtungen umwandelt, und wobei ein zweiter geformter Gleitschuhblock (9B) ausgebildet wird, um eine zweite translatorische Bewegung in die zweite Koppelstange (8B) während der Bewegung der Drehvorrichtung (4) um die zweite Drehachse einzuleiten, wobei der Mechanismus (6) die zweite translatorische Bewegung in eine Drehbewegung der mindestens zwei Paare von Führungsstangen (5) von ihren zweiten Ausrichtungen in ihre ersten Ausrichtungen umwandelt.

8. Vorrichtung (1) nach Anspruch 1,
wobei die Drehvorrichtung (4) einen Mechanismus (14) aufweist, der mit einer Antriebseinheit (15) gekoppelt und dazu ausgebildet ist, die mindestens zwei Paare von Führungsstangen (5) zwischen deren erster Ausrichtung und deren zweiter Ausrichtung während der Drehung der Drehvorrichtung (4) um die zweite Drehachse zu übertragen.

9. Vorrichtung (1) nach Anspruch 8,
wobei der Mechanismus (14) mindestens zwei miteinander im Eingriff stehende Zahnscheiben oder Zahnräder (7) aufweist, wobei ein entsprechendes Paar der mindestens zwei Paare von Führungsstangen (5) mit jeweils einer der mindestens zwei Zahnscheiben oder Zahnräder (7) drehgekoppelt ist, und wobei die mindestens zwei Zahnscheiben oder Zahnräder (7) derart mit der Antriebseinheit (15) in Wirkverbindung stehen, dass eine Drehbewegung, die von der Antriebseinheit (15) in Abhängigkeit von der Drehung der Drehvorrichtung (4) um die zweite Drehachse in die Zahnscheiben oder Zahnräder (7) eingeleitet wird, mittels der mindestens der zwei Zahnscheiben oder Zahnräder (7) in die entsprechende Drehbewegung der mindestens zwei Paare von Führungsstangen (5) umgewandelt wird, und
wobei die Antriebseinheit (15) vorzugsweise ein motorischer Antrieb, insbesondere ein Elektromotor, oder ein pneumatischer Antrieb ist.

10. Vorrichtung (1) nach einem der Ansprüche 1 bis 9,
wobei die Vorrichtung (1) ein Gestellgehäuse mit zwei seitlichen Streben (2A, 2B) aufweist, die mittels einer Verbindungsstrebe (3) miteinander verbunden sind.

11. Vorrichtung (1) nach Anspruch 10,
wobei die Drehvorrichtung (4) in dem Gestellgehäuse so gelagert ist, dass diese sich insbesondere drehend um die zweite Drehachse bewegen kann.

12. Vorrichtung (1) nach Anspruch 11,
wobei die Vorrichtung (1) einen elektromotorischen Antrieb (13) aufweist, der ausgebildet ist, um die Drehvorrichtung (4) in dem Gestellgehäuse zu bewegen, insbesondere um sie um die zweite Drehachse zu drehen, und wobei die Vorrichtung (1) eine Steuereinheit aufweist, die ausgebildet ist, um den elektromotorischen Antrieb (13) derart zu steuern, dass eine Drehung der Drehvorrichtung (4) in dem Gestellgehäuse mit der Förderbewegung der losen Artikelgruppe (12) synchronisiert ist; oder
wobei die Vorrichtung (1) einen elektromotorischen Antrieb (13) aufweist, der ausgebildet ist, um die Drehvorrichtung (4) in dem Gestellgehäuse zu bewegen, insbesondere um sie um die zweite Drehachse zu drehen, und wobei die Vorrichtung (1) eine Steuereinheit aufweist, die ausgebildet ist, um sowohl den elektromotorischen Antrieb (13) als auch die Antriebseinheit (15) derart zu steuern, dass eine Drehung der Drehvorrichtung (4) und eine Drehbewegung der mindestens zwei Paare von
Führungsstangen (5) miteinander und mit der Förderbewegung der losen Artikelgruppe (12) synchronisiert werden.

13. Verpackungsmaschine zum Verpacken loser Artikelgruppen (12), wobei die Verpackungsmaschine aufweist:
- mindestens eine Zuführstation zum Zuführen loser Artikelgruppen;
- mindestens einen Förderer, insbesondere ein Förderband, einen Fördertisch oder dergleichen, zum Befördern der losen Artikelgruppen;
- mindestens eine Vorrichtung (1) nach einem der Ansprüche 1 bis 12; und
- mindestens eine Verpackungsstation.

14. Verfahren zum Drehen von Artikeln (12A, 12B, 12C, 12D) einer losen Artikelgruppe (12), die mindestens zwei Artikel (12A, 12B; 12C, 12D) während einer Förderbewegung auf einem Förderer, insbesondere einem Förderband, einem Fördertisch oder dergleichen, mittels einer Vorrichtung (1) nach einem der Ansprüche 1 bis 12 beinhaltet.

## Revendications

1. Dispositif (1) pour mettre en rotation des articles (12A, 12B, 12C, 12D) d'un groupe d'articles en vrac (12) comportant au moins deux articles (12A, 12B, 12C, 12D) pendant un mouvement de transport sur un transporteur, en particulier une bande transporteuse, un tablier de transporteur, ou analogue, dans lequel le dispositif (1) a un dispositif rotatif (4), qui est réalisé pour entrer en contact, au moins par intermittence, avec les articles (12A, 12B, 12C, 12D) du groupe d'articles en vrac (12) pendant le mouvement de transport du groupe d'articles (12) et pendant le contact, pour mettre en rotation simultanément chaque article (12A, 12B, 12C, 12D) des au moins deux articles (12A, 12B, 12C, 12D) du groupe d'articles en vrac (12) respectivement autour d'un premier axe de rotation correspondant s'étendant orthogonalement à la direction de transport entre une première orientation respective et une deuxième orientation respective par rapport à un autre article (12A, 12B, 12C, 12D) des au moins deux articles (12A, 12B, 12C, 12D) du groupe d'articles en vrac (12),
**caractérisé en ce que**
le dispositif rotatif (4) est réalisé pour tourner autour d'un deuxième axe de rotation s'étendant orthogonalement à la direction de transport du groupe d'articles en vrac (12) et aux directions des premiers axes de rotation, dans lequel le dispositif rotatif (4) a au moins deux paires de tiges de guidage (5) opposées agencées espacées l'une de l'autre pour entrer en contact avec les au moins deux articles (12A, 12B, 12C, 12D), dans lequel pendant le contact, chacun des articles (12A, 12B, 12C, 12D) des au moins deux articles (12A, 12B, 12C, 12D) est reçu entre une paire respective de tiges de guidage (5), et dans lequel les au moins deux paires de tiges de guidage (5) sont capables de tourner dans des directions opposées, de manière respectivement réversible opposée l'une par rapport à l'autre, entre une première orientation et une deuxième orientation.

2. Dispositif (1) selon la revendication 1,
dans lequel le dispositif rotatif (4) est réalisé pour mettre en rotation les au moins deux articles (12A, 12B ; 12C, 12D) simultanément dans des directions de rotation opposées entre leurs première et deuxième orientations respectives, et/ou
dans lequel la première orientation des articles diffère d'un angle d'approximativement 90° depuis la deuxième orientation des articles.

3. Dispositif (1) selon la revendication 1 ou 2,
dans lequel pendant une rotation des au moins deux paires de tiges de guidage (5) depuis la première orientation jusque dans la deuxième orientation, les au moins deux articles (12A, 12B, 12C, 12D) du groupe d'articles en vrac (12) sont capables de tourner l'un par rapport à l'autre entre leurs première et deuxième orientations respectives.

4. Dispositif (1) selon l'une des revendications 1 à 3,
dans lequel le dispositif rotatif (4) a un mécanisme (6), qui est réalisé pour convertir un mouvement de translation - qui est introduit dans le mécanisme (6), en particulier transversalement à la direction de transport du groupe d'articles (12), pendant la rotation du dispositif rotatif (4) autour du deuxième axe de rotation - en un mouvement de rotation des au moins deux paires de tiges de guidage (5) entre leurs premières orientations et leurs deuxièmes orientations.

5. Dispositif (1) selon la revendication 4,
dans lequel le mécanisme (6) a au moins deux poulies dentées ou engrenages dentés (7) qui s'engrènent l'un avec l'autre et deux tiges de couplage (8A, 8B), dans lequel une paire respective des au moins deux paires de tiges de guidage (5) est couplée en rotation à l'une respective parmi les au moins deux poulies dentées ou engrenages dentés (7), et dans lequel une respective parmi les au moins deux poulies dentées ou engrenages dentés (7) est connectée de manière opérationnelle à l'une respective parmi les deux tiges de couplage (8A, 8B) de telle sorte que le mouvement de translation - qui est introduit dans l'une des deux tiges d'accouplement (8A, 8B) en fonction de la rotation du dispositif rotatif (4) autour du deuxième axe de rotation - est converti au moyen des au moins deux poulies dentées ou engrenages dentés (7) en le mouvement de rotation respectif des au moins deux paires de tiges de guidage (5), et dans lequel, de préférence, les au moins deux poulies dentées ou engrenages dentés (7) sont réalisés sous la forme de poulies dentées excentriques ou d'engrenages dentés excentriques ayant chacun une goupille excentrique (10) respective, et
dans lequel les goupilles excentriques (10) des au moins deux poulies dentées excentriques ou des engrenages dentés excentriques sont supportés dans le dispositif rotatif (4) de telle sorte qu'ils sont capables à la fois de tourner entre deux éléments de guidage en forme de tige (11) et de se déplacer en translation le long de la direction de transport du groupe d'articles (12).

6. Dispositif (1) selon la revendication 5,
dans lequel le dispositif (1) a un guide de coulisseau, dans lequel pendant la rotation du dispositif rotatif (4) autour du deuxième axe de rotation, les deux tiges de couplage (8A, 8B) sont guidées de manière restrictive au moyen du guide de coulisseau de telle sorte que le mouvement de translation est introduit dans le mécanisme (6).

7. Dispositif (1) selon la revendication 6,
dans lequel le guide de coulisseau a deux coulisseaux moulés (9A, 9B), dans lequel un premier coulisseau moulé (9A) est réalisé pour introduire un premier mouvement de translation dans la première (8A) de deux tiges de couplage (8A, 8B) pendant la rotation du dispositif rotatif (4) autour du deuxième axe de rotation,
dans lequel le mécanisme (6) convertit le premier mouvement de translation en un mouvement de rotation des au moins deux paires de tiges de guidage (5) de leurs premières orientations à leurs deuxièmes orientations, et dans lequel un deuxième coulisseau moulé (9B) est réalisé pour introduire un deuxième mouvement de translation dans la deuxième tige de couplage (8B) pendant le mouvement du dispositif rotatif (4) autour du deuxième axe de rotation, dans lequel le mécanisme (6) convertit le deuxième mouvement de translation en un mouvement de rotation des au moins deux paires de tiges de guidage (5) de leurs deuxièmes orientations à leurs premières orientations.

8. Dispositif (1) selon la revendication 1,
dans lequel le dispositif rotatif (4) a un mécanisme (14) qui est couplé à une unité d'entraînement (15) et est réalisé pour transférer les au moins deux paires de tiges de guidage (5) entre leur première orientation et leur deuxième orientation pendant la rotation du dispositif rotatif (4) autour du deuxième axe de rotation.

9. Dispositif (1) selon la revendication 8,
dans lequel le mécanisme (14) a au moins deux poulies dentées ou engrenages dentés (7) qui s'engrènent l'un avec l'autre, dans lequel une paire respective des au moins deux paires de tiges de guidage (5) est couplée en rotation à l'une respective parmi les au moins deux poulies dentées ou engrenages dentés (7), et dans lequel les au moins deux poulies dentées ou engrenages dentés (7) sont connectées à l'unité d'entraînement (15) de telle manière que le mouvent de rotation - qui est introduit dans les poulies dentées ou les engrenages dentés (7) par l'unité d'entraînement (15) en fonction de la rotation du dispositif rotatif (4) autour du deuxième axe de rotation - est converti au moyen des au moins deux poulies dentées ou engrenages dentés (7) en le mouvement de rotation respectif des au moins deux paires de tiges de guidage (5), et
dans lequel, de préférence, l'unité d'entraînement (15) est un entraînement par moteur, en particulier un moteur électrique, ou un entraînement pneumatique.

10. Dispositif (1) selon l'une des revendications 1 à 9,
dans lequel le dispositif (1) a un logement cadre avec deux entretoises latérales (2A, 2B) qui sont connectées l'une à l'autre au moyen d'une entretoise de liaison (3).

11. Dispositif (1) selon la revendication 10,
dans lequel le dispositif rotatif (4) est supporté dans le logement cadre de sorte qu'il est capable de se déplacer, en particulier de manière rotative autour du deuxième axe de rotation.

12. Dispositif (1) selon la revendication 11,
dans lequel le dispositif (1) a un entraînement électromoteur (13), qui est réalisé pour déplacer le dispositif rotatif (4) dans le logement cadre, en particulier pour le mettre en rotation autour du deuxième axe de rotation, et
dans lequel le dispositif (1) a une unité de commande, qui est réalisée pour commander l'entraînement électromoteur (13) de telle manière qu'une rotation du dispositif rotatif (4) dans le logement cadre est synchronisée avec le mouvement de transport du groupe d'articles en vrac (12) ; ou
dans lequel le dispositif (1) a un entraînement électromoteur (13), qui est réalisé pour déplacer le dispositif rotatif (4) dans le logement cadre, en particulier pour le mettre en rotation autour du deuxième axe de rotation, et
dans lequel le dispositif (1) a une unité de commande, qui est réalisée pour commander à la fois l'entraînement électromoteur (13) et l'unité d'entraînement (15) de telle sorte qu'une rotation du dispositif rotatif (4) et un mouvement de rotation des au moins deux paires de tiges de guidage (5) sont synchronisés l'un avec l'autre et avec le mouvement de transport du groupe d'articles en vrac (12).

13. Machine d'emballage pour l'emballage de groupes d'articles en vrac (12), dans laquelle la machine d'emballage comprend :
- au moins un poste d'alimentation pour alimenter des groupes d'articles en vrac ;
- au moins un transporteur, en particulier une bande transporteuse, un tablier de transporteur, ou analogue, pour transporter les groupes d'articles en vrac ;
- au moins un dispositif (1) selon l'une des revendications 1 à 12 ; et
- au moins un poste d'emballage.

14. Procédé pour mettre en rotation des articles (12A, 12B, 12C, 12D) d'un groupe d'articles en vrac (12) comprenant au moins deux articles (12A, 12B ; 12C, 12D) pendant un mouvement de transport sur un transporteur, en particulier une bande transporteuse, un tablier de transporteur ou analogue, à l'aide d'un dispositif (1) selon l'une des revendications 1 à 12.
